# EUROPÄISCHE PATENTANMELDUNG

(11) **EP 1 033 671 A1**
(43) Veröffentlichungstag der Anmeldung: **06.09.2000**
(21) Anmeldenummer: 99810185.1
(22) Anmeldetag: 04.03.1999
(51) Int. Cl.: G06K 13/07, G06K 17/00, G06K 1/12

(54) **Verfahren und Anlage zum Bearbeiten von Datenträgern**

(71) Anmelder: Zihlmann Engineering, 5436 Würenlos (CH)
(72) Erfinder: Zihlmann, Siegfried, 5436 Würenlos (CH)
(74) Vertreter: Patentanwälte Breiter + Wiedmer AG

(57) **Zusammenfassung**

Bei einem Verfahren zum beidseitigen Bearbeiten von Datenträgern (36) zur Aufnahme und Speicherung von Informationen aller Art in Form von Karten und dgl. flachen Körpern mit zwei zur Bearbeitung vorgesehenen planparallelen Oberflächen (50, 52) werden die Datenträger mit beidseits frei zugänglichen Oberflächen lösbar an Paletten (16) festgelegt, die Paletten (16) mit den Datenträgern (36) mittels eines Palettenförderers (18) zu entlang des Palettenförderers angeordneten Bearbeitungsstationen geführt, in den Bearbeitungsstationen auf den Paletten verbleibend ein- oder beidseitig bearbeitet und nach dem Bearbeiten von den Paletten entfernt. Mit dem Verfahren können Datenträger auf einfache Weise ohne zusätzliche Positionswechsel beidseitig bearbeitet werden.

## Beschreibung

Die Erfindung betrifft ein Verfahren und eine Anlage zum beidseitigen Bearbeiten von Datenträgern zur Aufnahme und Speicherung von Informationen aller Art in Form von Karten und dgl. flachen Körpern mit zwei zur Bearbeitung vorgesehenen planparallelen Oberflächen, wobei die Karten mittels eines Transportsystems zu einer Bearbeitungsstation geführt, in der Bearbeitungsstation bearbeitet und anschliessend zur nächsten Bearbeitungsstation weitertransportiert werden.

Datenträger zur Aufnahme und Speicherung von Informationen aller Art in Form von Karten und dgl. flachen Körpern mit zwei zur Bearbeitung vorgesehenen planparallelen Oberflächen sind heute für verschiedenartige Anwendungsbereiche bekannt. Beispiele sind Kreditkarten, Karten zur Zutrittskontrolle und Türöffnung, Zahlkarten für Kantinen, Kaffeeautomaten usw. Informationen können auf der Karte in unterschiedlicher Form aufgebracht sein. So können die Informationen beispielsweise aufgedruckt, geprägt oder in elektronischer Form auf an der Oberfläche der Karten angeordneten Magnetstreifen oder Chips gespeichert sein. Weiter können auf den Karten aus Gründen der Fälschungssicherheit Muster, Hologramme sowie weitere die Fälschungssicherheit erhöhende Elemente über spezielle Druckverfahren aufgetragen sein.

Zur Bearbeitung derartiger Karten gehört beispielsweise das Laden, Prüfen und Messen der in elektronischer Form gespeicherten Informationen, das beidseitige Beschriften, sowie weitere auf den Kartenoberflächen durchzuführenden Bearbeitungsschritte. Die Bearbeitung eines bestimmten Kartentyps für eine Gruppe von Individuen, beispielsweise für die Mitarbeiter einer Firma, erfolgt heute oft stapelweise bei einzelnen Bearbeitungsmaschinen, wobei ein Kartenstapel nach jeder Bearbeitung für die Durchführung des nachfolgenden Bearbeitungsschrittes zur nächsten Bearbeitungsstation überführt wird. Einzelne Bearbeitungsschritte wie beispielsweise das Laden, Messen und Prüfen von Magnetstreifen und Chips wird heute noch oft von Hand durchgeführt.

Es ist auch bereits ein Verfahren vorgeschlagen worden, bei welchem die Karten auf ein Transportband gelegt und unter Bearbeitungsstationen durchgeführt werden. Dieses Verfahren hat den Nachteil, dass die Karten immer nur einseitig bearbeitet werden können. Zur Bearbeitung der zweiten Seite müssen die Karten in jedem Fall von Hand oder über eine Hilfseinrichtung auf dem Band gedreht werden, wodurch sich die Gefahr einer Beschädigung der Karten erhöht.

Der Erfindung liegt deshalb die Aufgabe zugrunde, ein Verfahren sowie eine Anlage der eingangs genannten Art zu schaffen, mit welchen sich die Karten einfacher und bei nur geringer Gefahr einer mechanischen Beschädigung beidseitig bearbeitet werden können.

Bezüglich des Verfahrens führt zur Lösung der Aufgabe, dass die Datenträger mit beidseits frei zugänglichen Oberflächen lösbar an Paletten festgelegt, die Paletten mit den Datenträgern mittels eines Palettenförderers zu den entlang des Palettenförderers angeordneten Bearbeitungsstationen geführt, in den Bearbeitungsstationen auf den Paletten verbleibend ein- oder beidseitig bearbeitet und nach dem bearbeiten von den Paletten entfernt werden.

Durch die aufgestellte Datenträgerlage ist eine einfache Bearbeitung von beiden Seiten möglich und durch den während des gesamten Bearbeitungsprozesses in gleicher Lage fixierten Datenträger ist die Gefahr einer mechanischen Beschädigung äusserst gering.

Bevorzugt werden die Paletten einem Förderband aufliegend zu den Bearbeitungsstationen geführt, wobei die Datenträger zweckmässigerweise senkrecht zu der durch das Förderband vorgegebenen Förderebene von den Paletten abragen.

Bezüglich der Anlage führt zur erfindungsgemässen Lösung der Aufgabe, dass die Bearbeitungsstationen entlang eines Palettenförderers angeordnet und für den Transport der Karten zu aufeinanderfolgenden Bearbeitungsstationen auf den Palettenförderer aufsetzbare Paletten vorgesehen sind.

Bevorzugt weist der Palettenförderer ein Förderband auf. Für den Rücktransport leerer Paletten vom Ende der Transportstrecke zu deren Anfang kann ein zweites Förderband vorgesehen sein.

Eine zur Verwendung mit der erfindungsgemässen Anlage geeignete Palette ist mit einem Aufnahmeorgan zum lösbaren Festlegen der Datenträger unter Beibehaltung beidseits zugänglicher Oberflächen ausgestattet. Das Aufnahmeorgan kann beispielsweise ein Schlitz in der Palette sein. Bei einer zweckmässigen Ausgestaltungsform weist das Aufnahmeorgan zwei einander gegenüberstehende Halterungen mit Nuten zum Einschieben des Datenträgers auf.

Weitere Vorteile , Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht auf eine Anlage zum beidseitigen Bearbeiten von Datenträgern;
- Fig.2: einen Schnitt durch einen Teil der Anlage von Fig. 1 gemäss deren Linie I-I;
- Fig. 3: eine Schrägsicht auf eine Palette mit eingesetzter Magnetstreifenkarte.

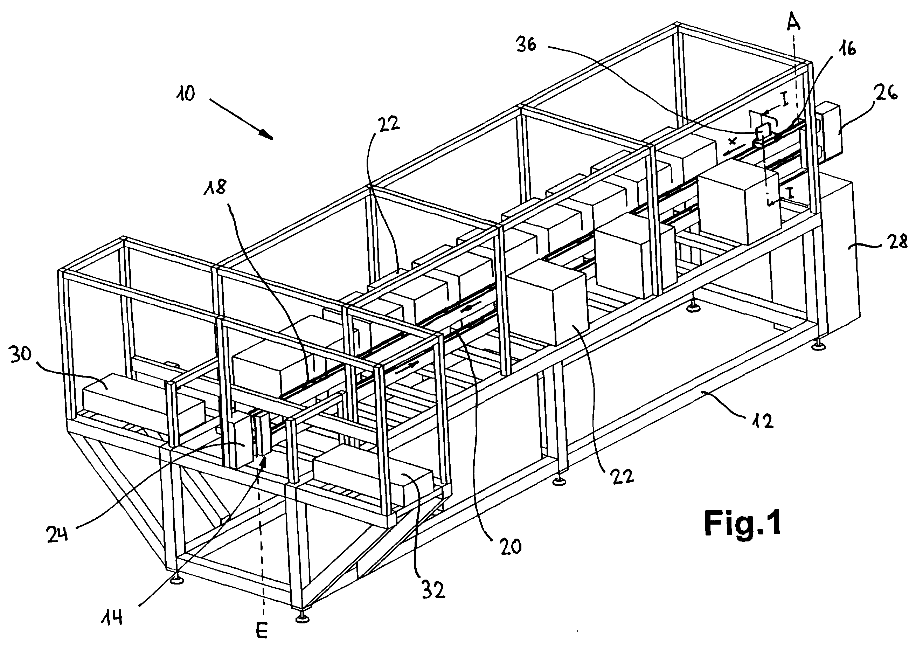

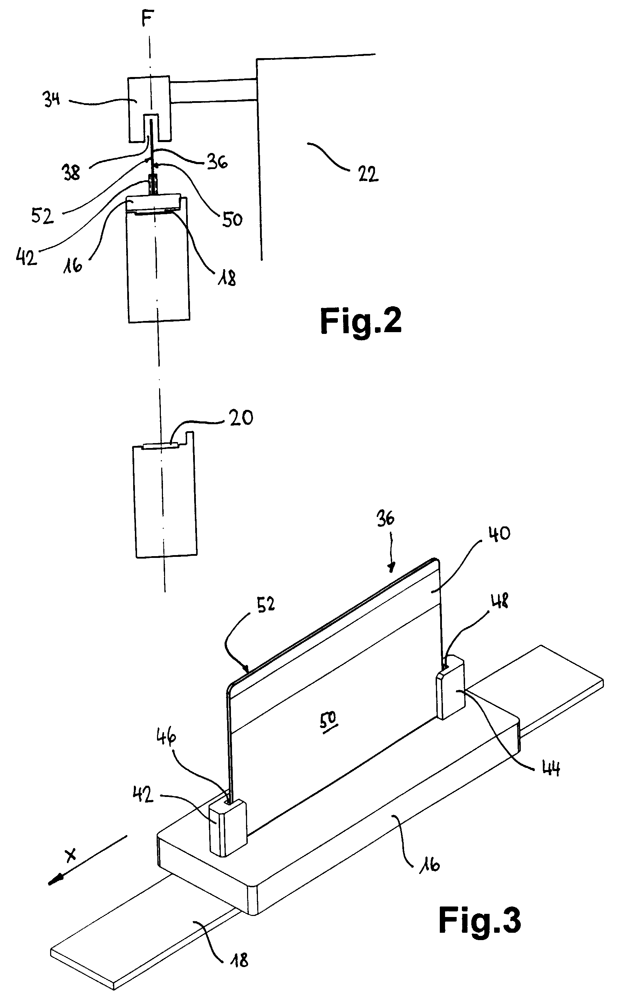

Eine Fig. 1 gezeigte Anlage 10 zum Bearbeiten von Datenträgern 36 weist einen auf einem Rahmen 12 montierten Palettenförderer 14 für den Transport von in Fig. 3 näher dargestellten Paletten 16 auf. Der Palettenförderer 14 weist ein oberes umlaufendes Förderband 18 und ein unteres umlaufendes Förderband 20 auf. Beidseits der Förderbänder 18, 20 sind in Transportrichtung x Bearbeitungsstationen 22 angeordnet. Das obere Förderband 18 dient dem Transport der mit Datenträgern 36 bestückten Paletten 16 vom Anfang A zum Ende E der Transportstrecke in Transportrichtung x. Das untere Förderband 20 transportiert die leeren Paletten 16 vom Ende E der Transportstrecke zu deren Anfang A zurück. Über eine im einzelnen nicht dargestellte, am Ende E des Palettenförderers 14 angeordnete Absenkeinrichtung 24 werden die leeren Paletten 16 für deren Rücktransport vom oberen Förderband 18 auf das untere Förderband 20 überführt. In gleicher Weise erfolgt am Anfang A der Transportstrecke die Überführung der Paletten 16 vom unteren Förderband 20 auf das obere Förderband 18 über eine Hebeinrichtung 26.

In Fig. 1 ist weiter am Anfang der Transportstrecke A eine Stapeleinrichtung 28 angedeutet, in der eine oder mehrere Stapel von Datenträgern 36 angeordnet sind. Über Ausstosser, Vakuumsauger, Greifer und dgl. Handlingeinrichtungen werden die zu bearbeitenden Datenträger 36 der Stapeleinrichtung 28 entnommen und auf die bereitstehenden Paletten 16 aufgesetzt. Am Ende E der Transportstrecke werden wiederum durch in der Zeichnung nicht dargestellte Handlingeinrichtungen die Datenträger 36 von den Paletten 16 entfernt und in einem ersten Aufnahmebehälter 30 gestapelt. Ein zweiter Aufnahmebehälter 32 dient beispielsweise zur Aufnahme von Ausschuss-Datenträgern.

Auf ihrem Transportweg werden die Paletten 16 bei den Bearbeitungsstationen 22 mit herkömmlichen Mitteln wie Stopper oder Hebevorrichtungen angehalten bzw. kurzzeitig vom oberen Förderband 18 angehoben. Bei der Bearbeitung von Datenträgern 36 sind nicht immer alle Bearbeitungsstationen 22 erforderlich. Die nicht verwendeten Bearbeitungsstationen 22 können aus der Anlage 10 entfernt oder auch nur stillgelegt werden. Aus der Funktionsweise der Anlage 10 geht ohne weiteres hervor, dass das Fördersystem Pufferzonen zur Verfügung stellt, indem vor langsamer arbeitenden Bearbeitungsstationen 22 Paletten 16 aufeinander auflaufen können. Die Anlage 10 ist somit nicht an ein taktweises Arbeiten gebunden.

Fig. 2 zeigt eine auf dem oberen Förderband 18 aufliegende Palette 16 im Bereich einer Bearbeitungsstation 22 diese ist im dargestellten Beispiel mit einem Magnetlese- bzw. schreibkopf 34 ausgestattet. Auf der Palette 16 ist senkrecht zu der durch das Förderband 18 gebildeten Förderebene ein Datenträger in Form einer Magnetstreifenkarte 36 lösbar festgelegt. Hierbei liegt die Ebene F der Magnetstreifenkarte 36 in der Transportrichtung x. Dadurch kann die Magnetstreifenkarte 36 ohne Positionsänderung den Schlitz 38 des Magnetlese- bzw. schreibkopfs 34 zur Bearbeitung passieren.

Die in Fig. 3 dargestellte Anordnung zeigt eine dem oberen Förderband 18 aufliegende Palette 16 zur lösbaren Aufnahme eines Datenträgers, im vorliegenden Fall eine Magnetstreifenkarte 36 mit einem Magnetstreifen 40. Zur Aufnahme der Magnetstreifenkarte 36 dienen zwei einander gegenüberliegende, von der Palette 16 senkrecht aufragende Halterungen 42, 44 mit einander zugewandten Längsnuten 46, 48, die den zwei Enden eines Aufnahmeschlitzes entsprechen. Die beiden planparallelen Oberflächen 50, 52 sind beidseits frei zugänglich und können damit in den Bearbeitungsstationen 22 ein- oder beidseitig bearbeitet werden, ohne dass die Palette 16 und/oder der Datenträger neu positioniert werden müssen.

## Patentansprüche

1. Verfahren zum beidseitigen Bearbeiten von Datenträgern (36) zur Aufnahme und Speicherung von Informationen aller Art in Form von Karten und dgl. flachen Körpern mit zwei zur Bearbeitung vorgesehenen planparallelen Oberflächen (50, 52), wobei die Karten (36) mittels eines Transportsystems zu einer Bearbeitungsstation (22) geführt, in der Bearbeitungsstation bearbeitet und anschliessend zur nächsten Bearbeitungsstation weitertransportiert werden,
dadurch gekennzeichnet, dass
die Datenträger (36) mit beidseits zugänglichen Oberflächen (50, 52) lösbar an Paletten (16) festgelegt, die Paletten (16) mit den Datenträgern (36) mittels eines Palettenförderers (14) zu den entlang des Palettenförderers angeordneten Bearbeitungsstationen (22) geführt, in den Bearbeitungsstationen (22) auf den Paletten (16) verbleibend ein- oder beidseitig bearbeitet und nach dem Bearbeiten von den Paletten (16) entfernt werden.

2. Verfahren nach Anspruch 1, dadurch gekennzeichnet, dass die Paletten (16) einem Förderband (18) aufliegend zu den Bearbeitungsstationen (22) geführt werden.

3. Verfahren nach Anspruch 2, dadurch gekennzeichnet, dass die Karten (36) im wesentlichen senkrecht zu der durch das Förderband (18) vorgegebenen Förderebene von den Paletten (16) abragen.

4. Anlage zum beidseitigen Bearbeiten von Datenträgern (36) zur Aufnahme und Speicherung von Informationen aller Art in Form von Karten und dgl. flachen Körpern mit zwei zur Bearbeitung vorgesehenen planparallelen Oberflächen (50, 52), wobei die Datenträger (36) mittels eines Transportsystems zu einer Bearbeitungsstation (22) geführt, in der Bearbeitungsstation bearbeitet und anschliessend zur nächsten Bearbeitungsstation weitertransportiert werden,
dadurch gekennzeichnet, dass
die Bearbeitungsstationen (22) entlang eines Palettenförderers (14) angeordnet und für den Transport der Datenträger (36) zu aufeinanderfolgenden Bearbeitungsstationen auf den Palettenförderer (14) aufsetzbare Paletten vorgesehen sind.

5. Anlage nach Anspruch 4, dadurch gekennzeichnet, dass der Palettenförderer (14) ein Förderband (18) aufweist.

6. Anlage nach Anspruch 4 oder 5, dadurch gekennzeichnet, dass der Palettenförderer (14) ein zweites Förderband (20) für den Rücktransport leerer Paletten (16) vom Ende (E) der Transportstrecke zu deren Anfang (A) vorgesehen ist.

7. Palette zur zeitweiligen Aufnahme und für den Transport von Datenträgern (36) zur Aufnahme und Speicherung von Informationen aller Art in Form von Karten und dgl. flachen Körpern mit zwei zur Bearbeitung vorgesehenen planparallelen Oberflächen (50, 52),
dadurch gekennzeichnet, dass
die Palette (16) mit einem Aufnahmeorgan zum lösbaren Festlegen der Datenträger (36) unter Beibehaltung beidseits zugänglicher Oberflächen (50, 52) ausgestattet ist.

8. Palette nach Anspruch 7, dadurch gekennzeichnet, dass das Aufnahmeorgan ein Schlitz in der Palette ist.

9. Palette nach Anspruch 7, dadurch gekennzeichnet, dass das Aufnahmeorgan zwei einander gegenüberstehende Halterungen (42, 44) mit Nuten (46, 48) zum Einschieben eines Datenträgers (36) aufweist.
